# EUROPEAN PATENT SPECIFICATION

(11) **EP 3 385 538 B1**
(45) Date of publication and mention of the grant of the patent: **01.04.2020**
(21) Application number: 16881539.7
(22) Date of filing: 09.11.2016
(51) Int. Cl.: F04C 18/02

(54) **SCROLL COMPRESSOR**
SPIRALVERDICHTER
COMPRESSEUR À VOLUTE

(30) Priority: 28.12.2015 JP 2015256983
(43) Date of publication of application: 10.10.2018
(73) Proprietor: Daikin Industries, Ltd., Osaka-shi, Osaka 530-8323 (JP)
(72) Inventor: YAMADA, Masahiro, Osaka-Shi, Osaka 530-8323 (JP)
(74) Representative: Goddar, Heinz J.
(86) International application number: PCT/JP2016/083242
(87) International publication number: WO 2017/115559

(56) References cited:
- EP-A2- 2 221 479
- JP-A- H0 777 175
- JP-A- H0 821 377
- JP-A- 2001 221 172
- US-A1- 2014 178 229

## Description

### TECHNICAL FIELD

The present disclosure relates to a scroll compressor provided with a compression mechanism having a fixed scroll and an orbiting scroll, and in particular, to a structure of allowing the compression mechanism to hold an Oldham ring that is a mechanism preventing the orbiting scroll from rotating on its axis.

### BACKGROUND ART

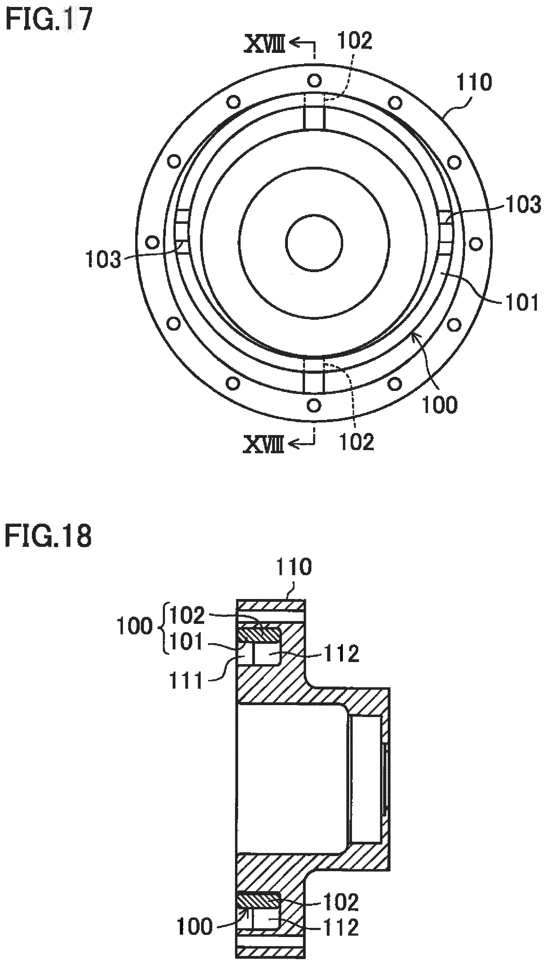

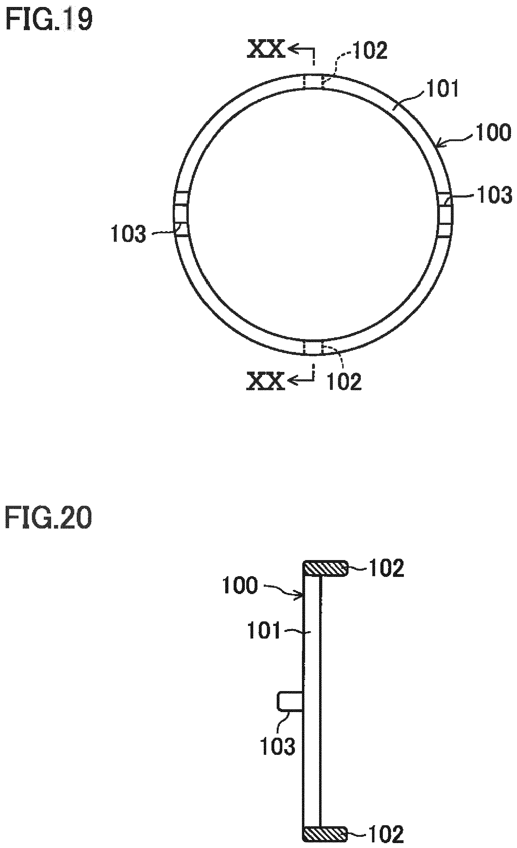

In conventional scroll compressors, an Oldham ring (100) is typically used to allow revolution of an orbiting scroll (not illustrated) while substantially preventing rotation of the orbiting scroll on its axis, as illustrated in FIG. 17 that is a plan view of a housing and the Oldham ring, FIG. 18 that is a cross-sectional view taken along line XVIII-XVIII of FIG. 17, FIG. 19 that is a plan view of the Oldham ring, and FIG. 20 that is a cross-sectional view taken along line XX-XX of FIG. 19. In general, the Oldham ring (100) is comprised of a ring portion (101) and keys (102, 103) which are integrally formed together. The Oldham ring (100) includes a pair of keys (102) and another pair of keys (103), the keys (102) being disposed on a surface of the ring portion (101) closer to a housing (110), the keys (103) being disposed on another surface of the ring portion (101) closer to the orbiting scroll. The pair of keys (102) protrudes from the surface of the ring portion (101) closer to the housing (110) in a direction perpendicular to the surface. The other pair of keys (103) protrude from the surface of the ring portion (101) closer to the orbiting scroll in a direction perpendicular to the surface. The housing (110) is provided with an annular opening (111) movably housing the ring portion (101) and a key groove (112) engaged with the keys (102).

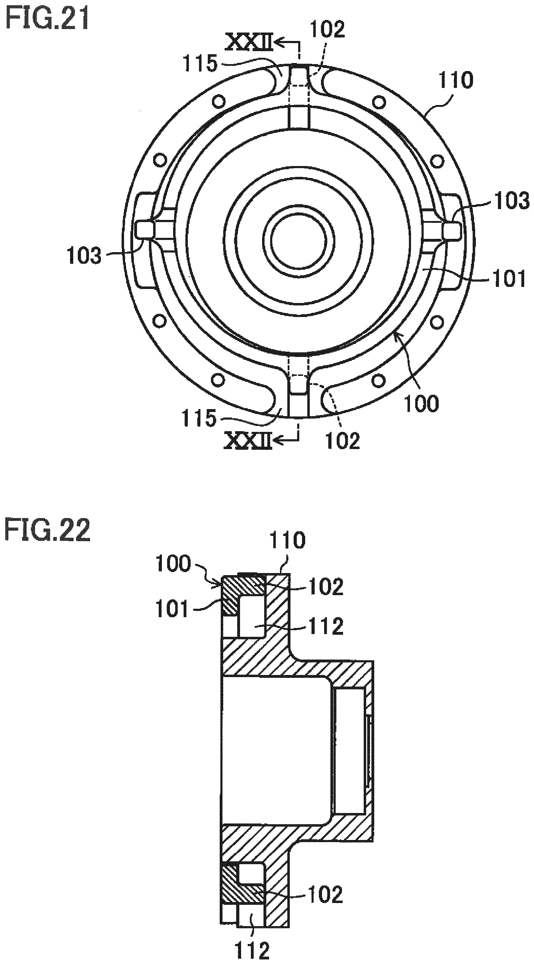

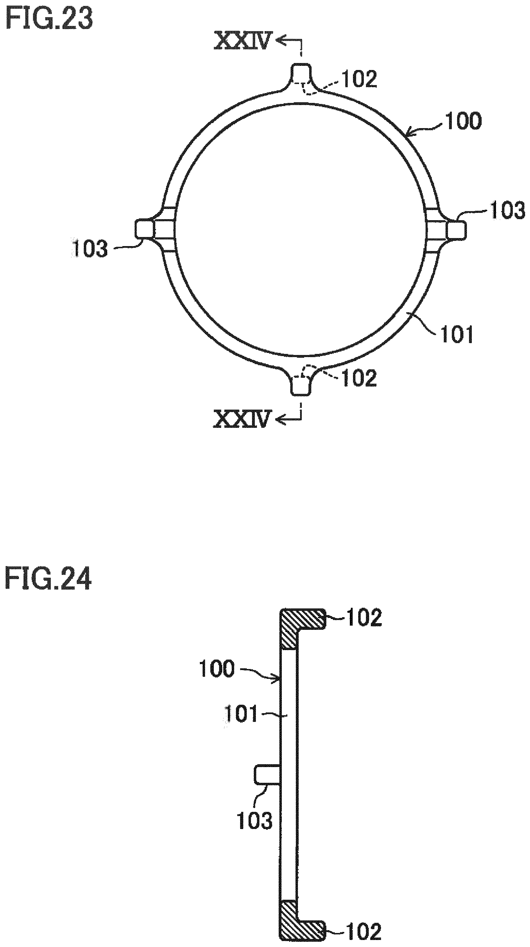

Patent Document 1 discloses, as a modification of the above structure, a structure in which the keys (102, 103) are disposed so as to protrude radially outwardly from the ring portion (101), as illustrated in FIGS. 21 to 24.

Further, Patent Document 2 discloses, as illustrated in FIGS. 25 to 28, a structure in which one pair of keys (102) of the pair of keys (102) and the pair of keys (103) of the Oldham ring (100) are formed to protrude radially inwardly from the ring portion (101), and not to protrude in the direction perpendicular to the surface.

US 2014/178229 A discloses a scroll compressor according to the preamble of claim 1. JP H07 77175 A relates to a scroll compressor. A fixed scroll and a revolving scroll are meshed with each other. An Oldham's ring is inserted into a portion between groves respectively formed on the revolving scroll and a frame for preventing revolving the scroll. A claw of the Oldham's ring is slit along a groove of the revolving scroll. The groove of the revolving scroll is increased in its width in the opposite direction of the revolving direction. A spring having a sliding plate is arranged at the widest position, and the claw of the Oldham's ring is energized in the revolving direction. When abnormal pressure is generated in a compression chamber, the sliding plate is displaced against the spring. Scroll laps are separated from each other for lowering the abnormal pressure in the compression chamber. EP 2 221 479 A2 discloses a scroll type compressor. The scroll type compressor includes a fixed scroll, a movable scroll engaged with a fixed scroll and a hermetically sealed container in which the fixed scroll and the movable scroll are mounted. The fixed scroll or the movable scroll has an intercommunication path for lubricating oil that is opened to the outside of the one scroll at one end thereof, extends radially inside the scroll and has a high-pressure opening intercommunicating with a high-pressure portion of the container and a low pressure opening intercommunicating with a low-pressure portion in the scroll, a pin member disposed in the intercommunication path so as to be movable radially in the scroll, a strew member dosing one end of the intercommunication path, and a stopper provided at a predetermined position in the intercommunication path to regulate radial movement of the pin member.

### CITATION LIST

### PATENT DOCUMENT

[Patent Document 1] Japanese Unexamined Patent Publication No. 2010-185462
[Patent Document 2] Japanese Unexamined Patent Publication No. S63-138181

### SUMMARY OF THE INVENTION

### TECHNICAL PROBLEM

The typical configuration of the Oldham ring (100) shown in FIGS. 17 to 20 has a small sliding area between the key (102) and the key groove (112), and thus, a contact pressure of the key sliding surface is increased, resulting in insufficient strength of the keys (102) of the Oldham ring (100).

In the configuration of Patent Document 1, as illustrated in FIG. 21, the outer periphery of the housing (110) may have to be provided with a notch (115), resulting in decreased strength of the housing (110). In addition, the keys (102, 103) are formed in the radially outside of the ring portion (101), and thus, a moment applied to the keys (102, 103) is increased, resulting in decreased strength of the Oldham ring (100).

Further, in the configuration of Patent Document 2, as illustrated in FIG. 25, the key groove (112) of the housing (110) is formed on an orbiting scroll facing surface (120) on which the orbiting scroll (not illustrated) faces the surface of the housing (110), and thus, the effective area of the orbiting scroll facing surface (120) is decreased, resulting in increased contact pressure. Also, in a situation where the orbiting scroll facing surface (120) in the scroll compressor is provided with a sealing ring, if the key groove (112) is intended to be formed in the radially inside of the orbiting scroll facing surface (120) relative to Oldham ring (100), and in particular, if the area of the orbiting scroll facing surface (120) is small, the sealing ring may hinder the formation of the key groove (112).

In view of the foregoing background, it is therefore an object of the present invention to prevent the strength of, e.g., a housing and an Oldham ring from decreasing too much while preventing the size of an orbiting scroll facing surface from decreasing too much.

### SOLUTION TO THE PROBLEM

A first aspect of the present disclosure is directed to a scroll compressor according to claim 1.

In this configuration, the orbiting scroll facing surface (70) facing the orbiting scroll (22) may be in contact with (slide on) the orbiting scroll (22) or may be spaced apart from (not slide on) the orbiting scroll (22).

According to the first aspect, the first key groove (61) formed in the position adjacent to the back surface of the facing portion (71) engages with the first key (54) of the Oldham ring (50), allowing the Oldham ring (50) to operate. In this configuration, the first key (64) protrudes from the ring portion (53) of the Oldham ring (50) toward the housing (23) and further protrudes in the radially inward direction of the ring portion (53). This can sufficiently increase the area of the sliding surface between the first key (54) and the first key groove (61) to reduce a contact pressure of the key sliding surface. Also, since the first key (54) protrudes in the radially inward direction of the Oldham ring (50), the outer periphery of the housing (23) does not have to be notched, and the moment of the first key (54) can be reduced. Further, the first key groove (61) is formed in the position adjacent to the back side of the orbiting scroll facing surface (70) (in the position adjacent to the back surface of the facing portion (71)), and thus, the first key groove (61) does not hinder the formation of the sealing ring.

A second aspect of the present disclosure is an embodiment of the first aspect. In the second aspect, the first key (54) includes a pair of first keys (54) opposed to each other by 180° on the Oldham ring (50), and an interval (A) between the pair of the first keys (54) is smaller than an outer diameter (B) of the facing portion (71) of the housing (23), and a thickness (C) of the ring portion (53) is larger than a thickness (D) of the facing portion (71) of the housing (23).

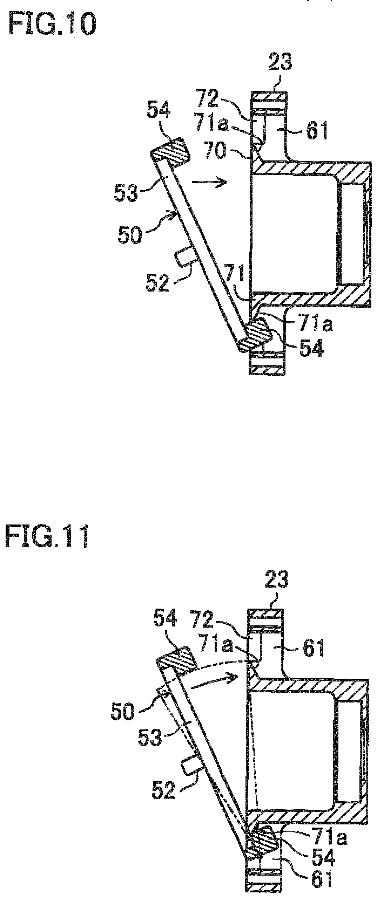

The second aspect satisfies the above dimension relationship, making it possible to easily attach the Oldham ring (50) to the housing (23) along an oblique direction, as illustrated in FIGS. 10 and 11.

A third aspect of the present disclosure is an embodiment of the first or second aspect of the present disclosure. In the third aspect, the back surface of the facing portion (71) is a tilted surface (71a) such that a thickness of the facing portion (71) increases toward an inner periphery of the facing portion (71).

According to the third aspect, the back surface of the facing portion (71) is the tilted surface (71a), and thus, when the Oldham ring (50) is attached to the housing (23), the first key (54) can be easily inserted into the first key groove (61).

A fourth aspect of the present disclosure is an embodiment of the first, second, or third aspect of the present disclosure. In the fourth aspect, the first key groove (61) is a groove opened on a back surface of the flange (23a) of the housing (23).

According to the fourth aspect, the first key (54) engages with the first key groove (61) opened on the back surface of the flange (23a) of the housing (23), allowing the Oldham ring (50) to operate.

A fifth aspect of the present disclosure is an embodiment of the first, second, or third aspect of the present disclosure. In the fifth aspect, the first key groove (61) is a groove opened on an outer peripheral surface of the flange (23a) of the housing (23).

According to the fifth aspect, the first key (54) engages with the first key groove (61) opened on the outer peripheral surface of the flange (23a) of the housing (23), allowing the Oldham ring (50) to operate.

A sixth aspect of the present disclosure is an embodiment of the first, second, or third aspect of the present disclosure. In the sixth aspect, the facing portion (71) is configured as a separate member different from the housing (23) and fixed to a main body of the housing (23).

According to the sixth aspect, the first key groove (61) is formed by fixing the facing portion (71) configured as a separate member to the main body of the housing (23), and the first key (54) engages with the first key groove (61), allowing the Oldham ring (50) to operate.

### ADVANTAGES OF THE INVENTION

According to the first aspect of the present disclosure, the first key (64) protrudes from the ring portion (53) of the Oldham ring (50) toward the housing (23) and further protrudes in the radially inward direction of the ring portion (53). This can sufficiently increase the area of the sliding surface between the first key (54) and the first key groove (61), and reduce a contact pressure of the key sliding surface contributing to preventing insufficient strength of the first key (54) of the Oldham ring (50). Also, the first key (54) protrudes in the direction radially inward of the Oldham ring (50), and the outer periphery of the housing (23) does not have to be notched. This can reduce the moment of the first key (54), and prevent the strength of the Oldham ring (50) from decreasing too much. Further, since the first key groove (61) is formed in the position adjacent to the back side of the orbiting scroll facing surface (70) (in the position adjacent to the back surface of the facing portion (71)), the first key groove (61) does not hinder the formation of the sealing ring, and it is possible to use the seal ring (50) in a configuration in which the first key (54) and the first key groove (61) engage with each other.

According to the second aspect of the present disclosure, the interval (A) between the pair of the first keys (54) is smaller than the outer diameter (B) of the facing portion (71) of the housing (23), and the thickness (C) of the ring portion (53) is larger than the thickness (D) of the facing portion (71) of the housing (23). Thus, as illustrated in FIGS. 10 and 11, the Oldham ring (50) can be easily attached to the housing (23) along an oblique direction. Accordingly, the Oldham ring (50) does not have to be made large, making it possible to reduce the size of the mechanism.

According to the third aspect of the present disclosure, the back surface of the facing portion (71) is the tilted surface (71a), and thus, when the Oldham ring (50) is attached to the housing (23), the first key (54) can be easily inserted into the first key groove (61), improving ease of attachment.

According to the fourth aspect of the present disclosure, the first key groove (61) is a groove opened on the back surface of the flange (23a) of the housing (23), easily forming the first key groove (61).

According to the fifth aspect of the present disclosure, the first key groove (61), which is a groove opened on the outer peripheral surface of the flange (23a) of the housing (23), can be easily formed.

According to the sixth aspect of the present disclosure, the first key groove (61) can be easily formed by fixing the facing portion (71) configured as a separate member to the main body of the housing (23).

### BRIEF DESCRIPTION OF THE DRAWINGS

[FIG. 1] FIG. 1 is a vertical cross-sectional view of a scroll compressor according to an embodiment of the present disclosure.
[FIG. 2] FIG. 2 is a plan view illustrating a state in which an Oldham ring is being attached to a housing.
[FIG. 3] FIG. 3 is a cross-sectional view taken along line III-III of FIG. 2.
[FIG. 4] FIG. 4 is a plan view of the Oldham ring.
[FIG. 5] FIG. 5 is a cross-sectional view taken along line V-V of FIG. 4.
[FIG. 6] FIG. 6 is a plan view illustrating a state in which the Oldham ring is being attached to the housing having a body whose back surface side is opened, and provided with a first key groove.
[FIG. 7] FIG. 7 is a cross-sectional view taken along line VII-VII of FIG. 6.
[FIG. 8] FIG. 8 illustrates a relationship between the dimension of the housing and the dimension of the Oldham ring.
[FIG. 9] FIG. 9 illustrates a portion of FIG. 8 on an enlarged scale.
[FIG. 10] FIG. 10 is a plan view illustrating a first state in which the Oldham ring is being attached to the housing.
[FIG. 11] FIG. 11 is a plan view illustrating a second state in which the Oldham ring is being attached to the housing.
[FIG. 12] FIG. 12 is a partially enlarged cross-sectional view of a housing according to a first variation.
[FIG. 13] FIG. 13 is a partially enlarged cross-sectional view of a housing according to a second variation.
[FIG. 14] FIG. 14 is a plan view of a housing and an Oldham ring according to a third variation.
[FIG. 15] FIG. 15 is a cross-sectional view taken along line XV-XV of FIG. 14.
[FIG. 16] FIG. 16 is a cross-sectional view of a main part of a compressor according to another embodiment.
[FIG. 17] FIG. 17 is a plan view illustrating a state in which an Oldham ring is being attached to a housing according to a first conventional example.
[FIG. 18] FIG. 18 is a cross-sectional view taken along line XVIII-XVIII of FIG. 17.
[FIG. 19] FIG. 19 is a plan view of the Oldham ring of the first conventional example.
[FIG. 20] FIG. 20 is a cross-sectional view taken along line XX-XX of FIG. 19.
[FIG. 21] FIG. 21 is a plan view illustrating a state in which an Oldham ring is being attached to a housing according to a second conventional example.
[FIG. 22] FIG. 22 is a cross-sectional view taken along line XXII-XXII of FIG. 21.
[FIG. 23] FIG. 23 is a plan view of the Oldham ring of the second conventional example.
[FIG. 24] FIG. 24 is a cross-sectional view taken along line XXIV-XXIV of FIG. 23.

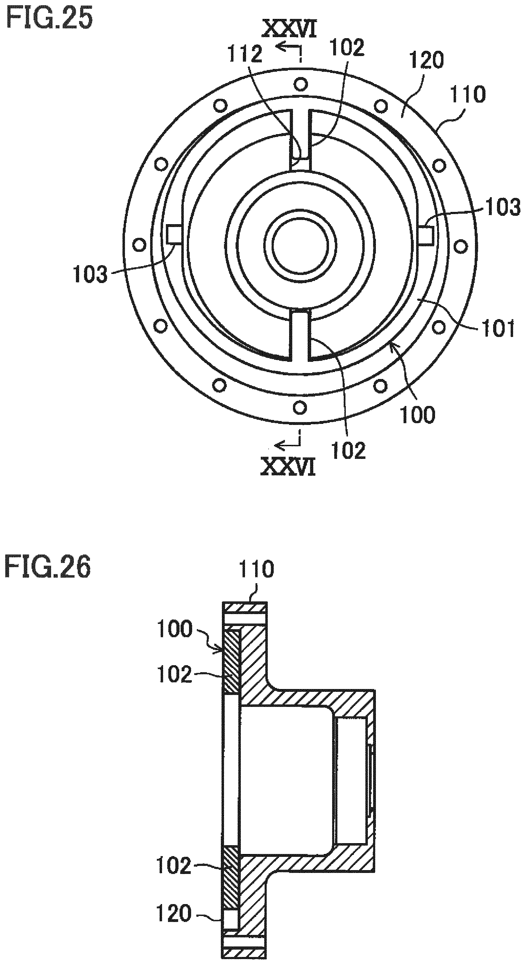

[FIG. 25] FIG. 25 is a plan view illustrating a state in which an Oldham ring is being attached to a housing according to a third conventional example.
[FIG. 26] FIG. 26 is a cross-sectional view taken along line XXVI-XXVI of FIG. 25.

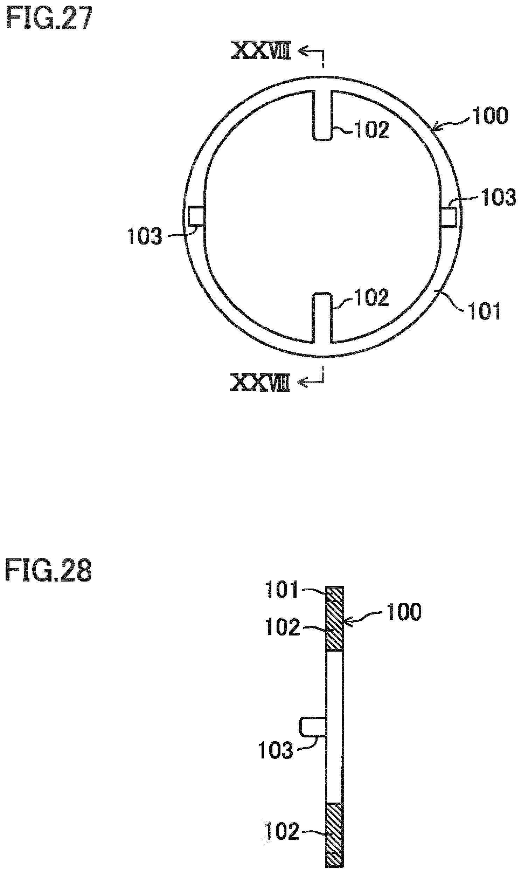

[FIG. 27] FIG. 27 is a plan view of the Oldham ring of the third conventional example.
[FIG. 28] FIG. 28 is a cross-sectional view taken along line XXVIII-XXVIII of FIG. 27.

### DESCRIPTION OF EMBODIMENTS

Embodiments of the present disclosure will now be described in detail with reference to the drawings.

A scroll compressor according to this embodiment is provided to, e.g., a refrigerant circuit of an air conditioner performing a vapor compression refrigeration cycle, and compresses a low-pressure refrigerant that has been sucked from an evaporator to discharge it into a condenser.

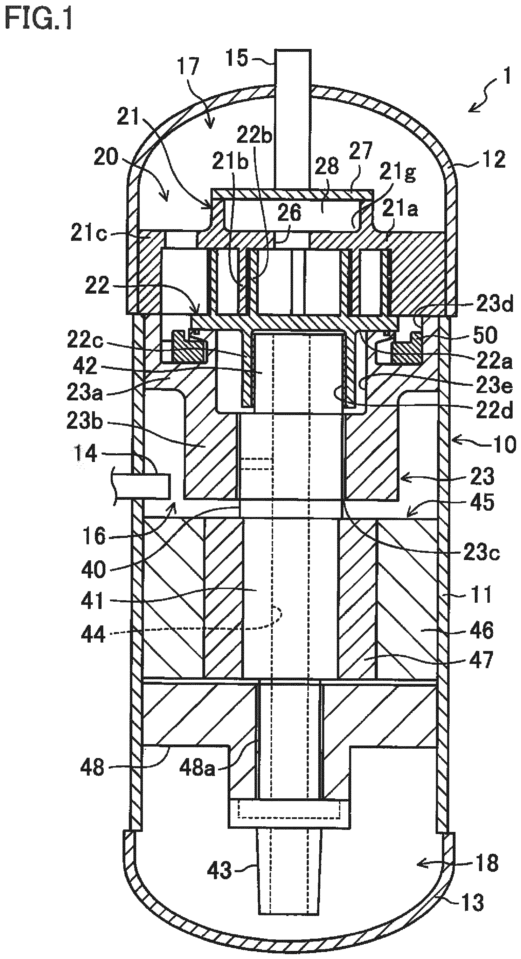

As illustrated in FIG. 1, the scroll compressor (1) is a so-called hermetic compressor. This scroll compressor (1) includes a casing (10) that is a hermetically-sealed container with a vertically oriented cylindrical shape. The casing (10) includes a body (11) with a vertically oriented cylindrical shape, an upper end plate (12) fixed to the upper end of the body (11), and a lower end plate (13) fixed to the lower end of the body (11).

This casing (10) houses a compression mechanism (20) compressing a refrigerant, and an electric motor (45) driving the compression mechanism (20). The electric motor (45) is disposed below the compression mechanism (20), and is coupled to the compression mechanism (20) through a drive shaft (40) that is a rotational shaft. The electric motor (45) is implemented as a brushless DC motor controlled by an inverter to adjust a rotational speed to be variable.

A discharge pipe (15) passes through and is attached to the upper end plate (12) that is a top of the casing (10). This discharge pipe (15) has its terminal end (the lower end in the figure) connected to the compression mechanism (20). A suction pipe (14) passes through and is attached to the body (11) of the casing (10). This suction pipe (14) has its terminal end (the right end in the figure) open toward a space between the compression mechanism (20) and the electric motor (45) in the casing (10).

The drive shaft (40) is disposed on the vertical center line of the casing (10). The drive shaft (40) is a crank shaft including a main shaft portion (41) and an eccentric portion (42). The eccentric portion (42) has a smaller diameter than the main shaft portion (41), and is formed on the upper surface of the main shaft portion (41). The eccentric portion (42) is eccentric from the axial center of the main shaft portion (41) by a predetermined dimension, and constitutes an eccentric pin.

A lower bearing holder (48) is fixed to a portion adjacent to the lower end of the body (11) of the casing (10). This lower bearing holder (48) rotatably supports the lower end of the main shaft portion (41) of the drive shaft (40) through a sliding bearing (48a).

The interior of the drive shaft (40) is provided with an oil supply passage (44) extending vertically. The lower end of the main shaft portion (41) is provided with an oil supply pump (43). This oil supply pump (43) sucks refrigerating machine oil from the bottom of the casing (10). The refrigerating machine oil passes through the oil supply passage (44) of the drive shaft (40) to be supplied to the sliding portion of the compression mechanism (20) and the bearing of the drive shaft (40).

The electric motor(45) is comprised of a stator (46) and a rotor (47). The stator (46) is fixed to the body (11) of the casing (10). The rotor (47) is coupled to the main shaft portion (41) of the drive shaft (40) to drive the drive shaft (40) in rotation.

The compression mechanism (20) includes a fixed scroll (21), an orbiting scroll (22), and a housing (23) fixing and supporting the fixed scroll (21). The fixed scroll (21) and the orbiting scroll (22) respectively include spiral laps (21b, 22b) meshing with each other on end plates (21a, 22a). The compression mechanism (20) is configured such that the orbiting scroll (22) rotates eccentrically relative to the fixed scroll (21).

The housing (23) is comprised of a main body (flange) (23a) and a bearing holder (23b). The main body (23a) is formed to be vertically continuous with the bearing holder (23b), and the main body (23a) is fitted into and coupled to the body (11) of the casing (10). The bearing holder (23b) has a smaller diameter than the main body (23a), and protrudes downward from the main body (23a). The bearing holder (23b) rotatably supports the main shaft portion (41) of the drive shaft (40) through a sliding bearing (23c).

The fixed scroll (21) is comprised of a fixed end plate (21a), a fixed lap (21b), and an edge portion (21c). The fixed end plate (21a) is formed to have a substantially disk shape. The fixed lap (21b) stands near the middle portion of the lower surface of the fixed end plate (21a), and is integrally formed with the fixed end plate (21a). The fixed lap (21b) is formed to have a spiral wall shape with a constant height. The edge portion (21c) is a wall extending downward from the outer peripheral portion of the fixed end plate (21a), and has a lower surface overlapping with the upper surface of the main body (23a) of the housing (23) to be fixed to the housing (23).

The orbiting scroll (22) is comprised of an orbiting end plate (22a), an orbiting lap (22b), and a boss (22c). The orbiting end plate (22a) is formed to have a substantially disk shape. The orbiting lap (22b) stands on the upper surface of the orbiting end plate (22a), and is integrally formed with the orbiting end plate (22a). The orbiting lap (22b) is formed to have a spiral wall shape with a constant height, and to mesh with the fixed lap (21b) of the fixed scroll (21).

The upper end of the fixed end plate (21a) is provided with a depression (21g), and a discharge cover (27) is attached to the upper surface of the fixed end plate (21a) to cover the depression (21g). A space where the depression (21g) is covered with the discharge cover (27) is a discharge chamber (28) communicating with the discharge pipe (15). A middle lower portion of the fixed end plate (21a) is provided with a discharge port (26) communicating with the discharge chamber (28), and the discharge port (26) communicates with a compression chamber formed between the fixed lap (21b) and the orbiting lap (22b). In this embodiment, in the interior of the casing (10), both upper and lower spaces (16) and (17) of the housing (23) are low-pressure spaces filled with a low-pressure refrigerant.

The boss (22c) extends downwardly from the lower surface of the orbiting end plate (22a), and integrally formed with the orbiting end plate (22a). The eccentric portion(42) of the drive shaft (40) is inserted into the boss (22c) through a sliding bearing (22d). Therefore, if the drive shaft (40) rotates, the orbiting scroll (22) revolves around the axial center of the main shaft portion (41). The revolution radius of the orbiting scroll (22) is the same as the eccentricity of the eccentric portion(42), i.e., a distance from the axial center of the main shaft portion (41) to the axial center of the eccentric portion (42).

The orbiting end plate (22a) is disposed in a first recess (23d) provided to the upper end of the housing (23). The boss (22c) is disposed in a second recess (a crank chamber) (23e) provided to the main body (23a) of the housing (23). The Oldham ring (50) is disposed between the orbiting end plate (22a) and the housing (23) to prevent the orbiting scroll (22) from rotating on its axis.

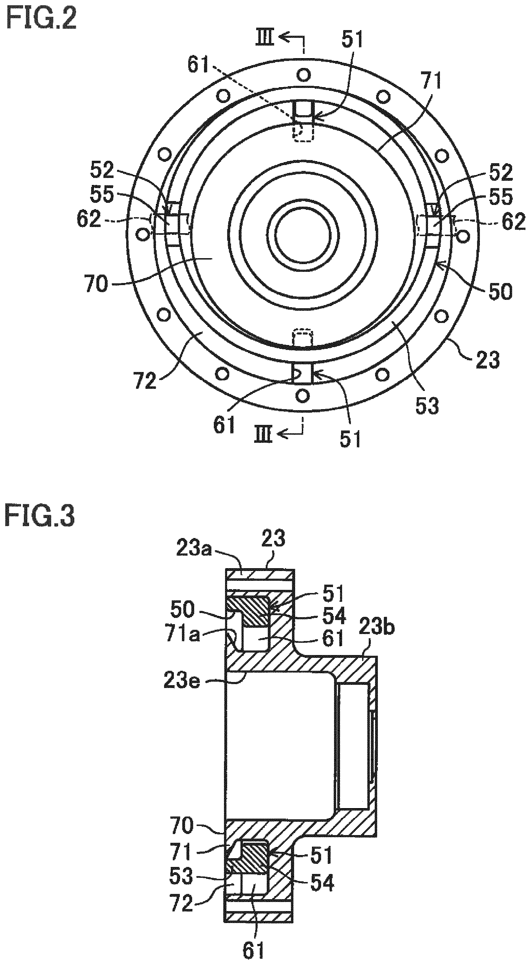

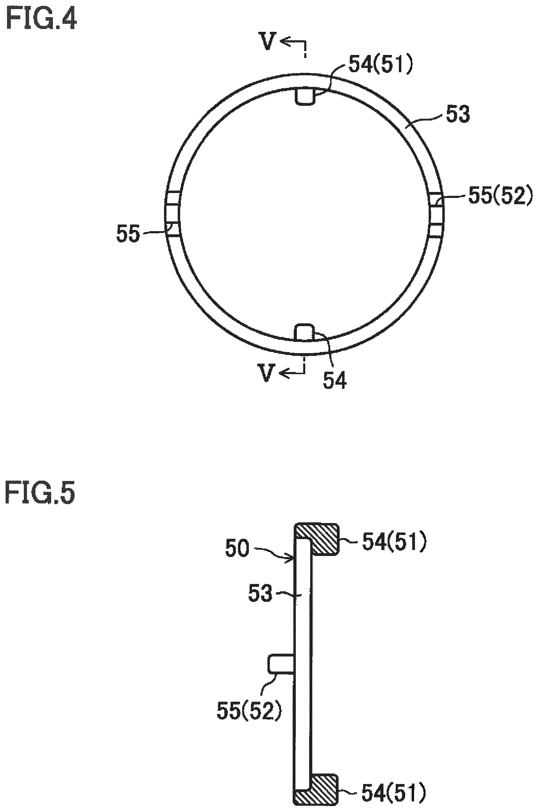

FIG. 2 is a plan view illustrating a state in which the Oldham ring (50) is being attached to the housing (23) and FIG. 3 is a cross-sectional view taken along line III-III of FIG. 2. FIG. 4 is a plan view of the Oldham ring (50), and FIG. 5 is a cross-sectional view taken along line V-V of FIG. 4. The Oldham ring (50) is configured to be slidable on the housing (23), into which the drive shaft (40) is inserted, by a first key mechanism (51) in a first direction perpendicular to the axial center of drive shaft (40). The orbiting scroll (22) meshes with the fixed scroll (21) fixed to the housing (23), and is configured to be slidable on the Oldham ring (50) by a second key mechanism (52) in a second direction perpendicular to the axial center of drive shaft (40).

The Oldham ring (50) has a ring portion (53). The first key mechanism (51) is comprised of a first key (54) provided to the ring portion (53) and a first key groove (61) formed in the housing (23). The second key mechanism (52) is comprised of a second key (55) provided to the ring portion (53) and a second key groove (62) formed in the orbiting scroll (22).

A reciprocating motion of the first key (54) in the first key groove (61) and a reciprocating motion of the second key (55) in the second key groove (62) are synthesized to allow the orbiting scroll (22) engaging with the second key (55) to rotate on its axis, not to revolve around the fixed scroll (21) fixed to the housing (23).

As illustrated in FIGS. 2 to 5, the first key (54) protrudes from the ring portion (53) of the Oldham ring (50) toward the housing (23) (away from the orbiting scroll (22)), and further protrudes in a radially inward direction of the ring portion (53). The housing (23) includes a main body (23a) that is a flange to which the fixed scroll (21) is fixed, and the main body (23a) includes: a facing portion (71) having a predetermined thickness and having an orbiting scroll facing surface (70) being in contact with and facing (sliding on) the orbiting scroll (22); and an annular opening (72) formed around the orbiting scroll facing surface (70) and movably housing the ring portion (53). The first key groove (61) is provided to the back surface (71a) of the facing portion (71) (the surface opposite to the orbiting scroll facing surface (70)) so as to extend radially inwardly from the annular opening (72).

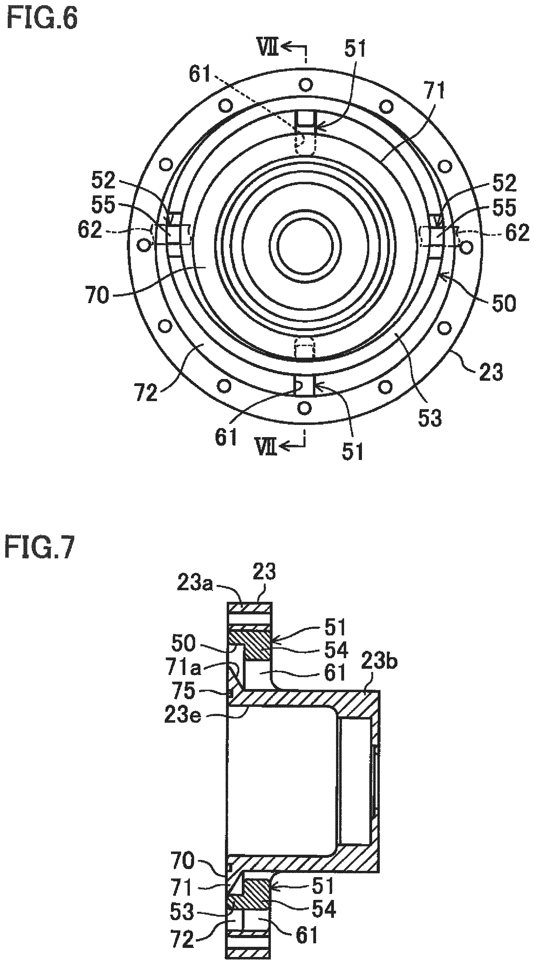

As illustrated in FIGS. 6 and 7, the first key groove (61) is preferably a groove opened on the back surface of the main body (23a) that is the flange of the housing (23). In the following description of this embodiment, the first key groove (61) is supposed to be a groove opened on the back surface of the main body (23a), as illustrated in FIGS. 6 and 7. In FIG. 7, the orbiting scroll facing surface (70) is provided with a groove, i.e., a seal ring mounting groove (75) provided in a situation where a sealing ring is mounted to the orbiting scroll facing surface (70).

The first key (54) includes a pair of first keys (54) opposed to each other by 180° on the Oldham ring (50). The second key (55) includes a pair of second keys (55) opposed to each other by 180° on the Oldham ring (50) so as to be at right angles with the first key (54).

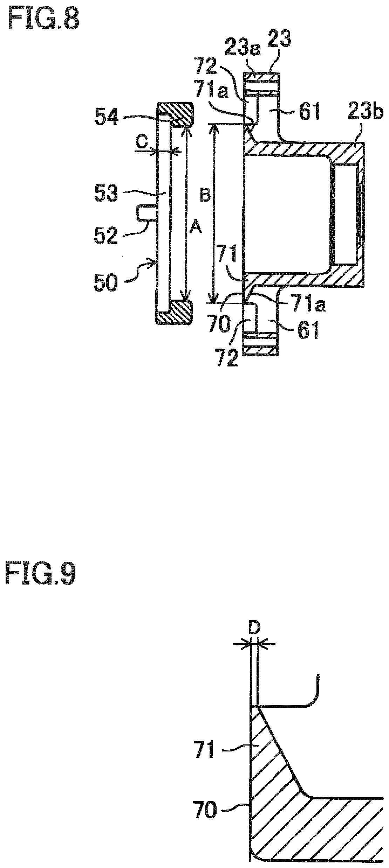

In this embodiment, in FIGS. 8 and 9, the interval (A) between the pair of the first keys (54) is smaller than the outer diameter (B) of the facing portion (71) of the housing (23), and the thickness (C) of the ring portion (53) is larger than the thickness (D) of the facing portion (71) of the housing (23). The back surface of the facing portion (71) is a tilted surface (71a) such that the thickness of the facing portion (71) increases toward the inner periphery of the facing portion (71).

According to such a configuration, as illustrated in FIG. 10, one first key (54) is inserted into one first key groove (61) from the annular opening (72) while the Oldham ring (50) is tilted, allowing one first key (54) to engage with the back surface (71a) of the facing portion (71) as illustrated in FIG. 11. Then, the other first key (54) is inserted into the other first key groove (61). This allows for attaching the Oldham ring (50) to the housing (23).

### -Operation-

Next, it will be described how the scroll compressor (1) stated above is operated.

First, if the electric motor (45) is driven, the drive shaft (40) rotates and the orbiting scroll (22) revolves relative to the fixed scroll (21). At that time, the Oldham ring (50) prevents the fixed scroll (21) from rotating on its axis.

Along with the revolution of the orbiting scroll (22), volumes of the compression chambers (25a, 25b) increase and decrease repeatedly and periodically. In the compression chambers (25a, 25b), the refrigerant in the refrigerant circuit is sucked from the suction pipe (14) through a suction passage (not shown) and the suction port (29) into the compression chambers (25a, 25b) when the volume of a portion, communicating with the suction port (29), of the compression chambers (25a, 25b) is increased, and the refrigerant in the refrigerant circuit is compressed and discharged from the discharge port (26) to the discharge chamber (28) when the volume of a portion in which a suction side is closed decreases. The refrigerant in the discharge chamber (28) is supplied from the discharge pipe (15) to the condenser in the refrigerant circuit, and is circulated in the refrigerant circuit. Then, the refrigerant in the discharge chamber (28) is sucked into the scroll compressor (1), again.

Next, the operation of the Oldham ring (50) of this embodiment will be described.

In this embodiment, the first key groove (61) formed in a position adjacent to the back surface of the opposing surface (71) engages with the first key (54) of the Oldham ring (50), allowing the Oldham ring (50) to operate. At that time, the first key (64) protrudes from the ring portion (53) of the Oldham ring (50) toward the housing (23) and further protrudes in the radially inward direction of the ring portion (53). This can sufficiently increase the area of the sliding surface between the first key (54) and the first key groove (61) to reduce a contact pressure of the key sliding surface. Also, the first key (54) protrudes in the radially inward direction of the Oldham ring (50), and the outer periphery of the housing (23) does not have to be notched (see FIG. 20), and the moment of the first key (54) can be reduced. Further, the first key groove (61) is formed in the position adjacent to the back side of the orbiting scroll facing surface (70) (in the position adjacent to the back surface of the facing portion (71)), and thus, even if a sealing ring (not illustrated) is used, the first key groove (61) does not hinder the formation of the sealing ring.

Also, according to this embodiment, the pair of first keys (54) are opposed to each other by 180° on the Oldham ring (50) to satisfy the relationship such that the interval (A) between the pair of the first keys (54) is smaller than the outer diameter (B) of the facing portion (71) of the housing (23) and the thickness (C) of the ring portion (53) is larger than the thickness (D) of the facing portion (71) of the housing (23). Thus, as illustrated in FIGS. 10 and 11, the Oldham ring (50) can be easily attached to the housing (23) along an oblique direction.

Also, the back surface of the facing portion (71) is the tilted surface (71a), and thus, when the Oldham ring (50) is attached to the housing (23), the first key (54) can be easily inserted into the first key groove (61). In this embodiment, the first key (54) engages with the first key groove (61) opened on the back surface of the flange (23a) of the housing (23), allowing the Oldham ring (50) to operate.

### -Advantages of Embodiment-

According to this embodiment, the first key (64) protrudes from the ring portion (53) of the Oldham ring (50) toward the housing (23) and further protrudes in the radially inward direction of the ring portion (53). This can sufficiently increase the area of the sliding surface between the first key (54) and the first key groove (61) to reduce a contact pressure of the key sliding surface. Therefore, this can contribute to preventing insufficient strength of the first key (54) of the Oldham ring (50).

Also, since the first key (54) protrudes in the radially inward direction of the Oldham ring (50), the outer periphery of the housing (23) does not have to be notched, and the moment of the first key (54) can be reduced. Therefore, this can contribute to preventing the strength of the Oldham ring (50) from decreasing too much.

Further, the first key groove (61) is formed in the position adjacent to the back side of the orbiting scroll facing surface (70) (in the position adjacent to the back surface of the facing portion (71)), and thus, the first key groove (61) does not hinder the formation of the sealing ring (not illustrated). Therefore, this makes it possible to use the seal ring (50) in a configuration in which the first key (54) and the first key groove (61) engage with each other.

Also, according to this embodiment, the interval (A) between the pair of the first keys (54) is smaller than the outer diameter (B) of the facing portion (71) of the housing (23), and the thickness (C) of the ring portion (53) is larger than the thickness (D) of the facing portion (71) of the housing (23). Thus, as illustrated in FIGS. 10 and 11, the Oldham ring (50) can be easily attached to the housing (23) along an oblique direction. Accordingly, the Oldham ring (50) does not have to be made large, making it possible to reduce the size of the mechanism.

Also, according to this embodiment, the back surface of the facing portion (71) is the tilted surface (71a), and thus, when the Oldham ring (50) is attached to the housing (23), the first key (54) can be easily inserted into the first key groove (61), improving ease of attachment.

Also, the first key groove (61) according to this embodiment, which is a groove opened on the back surface of the main body (flange) (23a) of the housing (23), can be easily formed.

### -Variations of Embodiment-

### (First Variation)

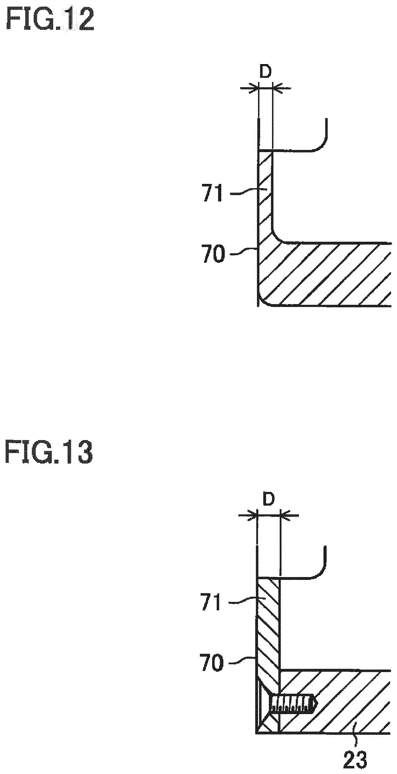

As illustrated in FIG. 12, the facing portion (71) may have a plate shape with a constant thickness. Such a configuration also allows for easily forming the first key groove (61) in the main body (23a) of the housing (23), and easily mounting the first key (54) in the first key groove (61).

### (Second Variation)

As illustrated in FIG. 13, the facing portion (71) may be configured as a separate member fixed to the main body (23a) of the housing (23). Such a configuration also allows for easily forming the first key groove (61) in the main body (23a) of the housing (23), and easily mounting the first key (54) in the first key groove (61).

### (Third Variation)

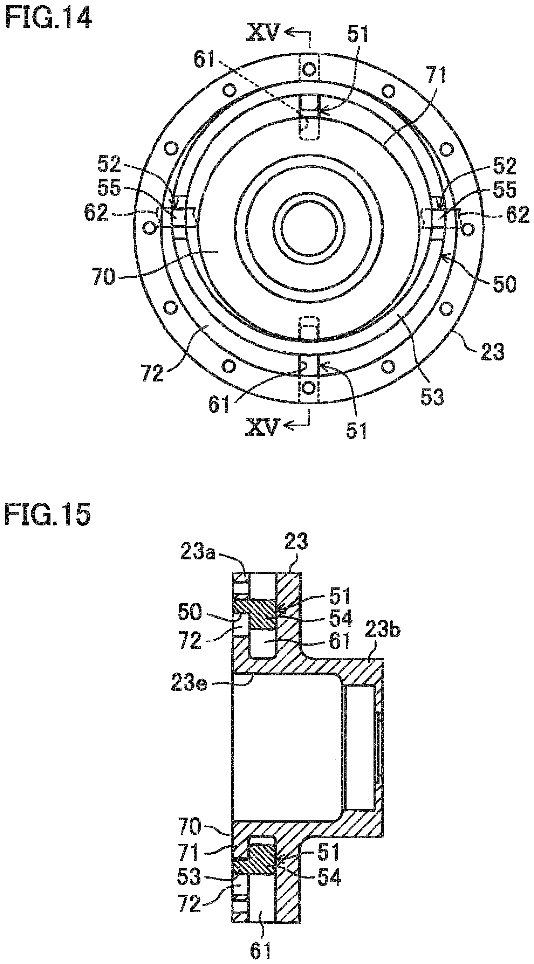

As illustrated in FIGS. 14 and 15, the first key groove (61) may be a groove opened on the outer peripheral surface of the main body (flange) (23a) of the housing (23).

Also in such a configuration, the groove opened on the outer peripheral surface of the main body (flange) (23a) of the housing (23) which functions as first key groove (61) can be easily formed.

### «Other Embodiments»

The above-described embodiment may be modified as follows.

For example, in this embodiment, the interval (A) between the pair of the first keys (54) is set to be smaller than the outer diameter (B) of the facing portion (71) of the housing (23), and the thickness (C) of the ring portion (53) is set to be larger than the thickness (D) of the facing portion (71) of the housing (23). However, these elements do not necessarily have to be set as described above.

In the third variation of the embodiment, oil may remain in the first key groove (61) to prevent the first key (54) from moving smoothly. It is therefore suitable that the housing (23) is provided with an oil removing hole for removing oil from the first key groove (61).

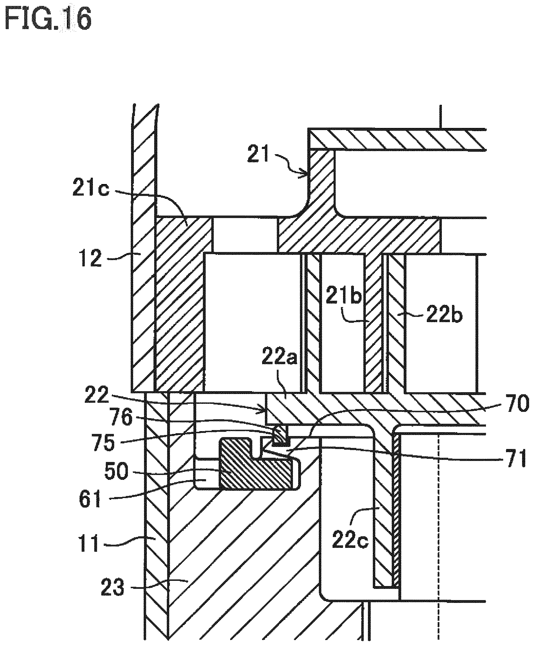

According to this embodiment, the orbiting scroll facing surface (70) of the facing portion (71) of the housing (23) is in contact with and faces the orbiting end plate (22a) of the orbiting scroll (22) to slide on the orbiting end plate (22a). However, as illustrated in FIG. 16, the sealing ring (76) may be mounted in the sealing ring mounting groove (75) to allow the orbiting scroll facing surface (70) to be spaced apart from and face the orbiting end plate (22a) of the orbiting scroll (22), and thus, the orbiting scroll facing surface (70) may be a surface not sliding on the orbiting end plate (22a). Even if the orbiting scroll facing surface (70) is not the surface sliding on the orbiting scroll (22), the above configuration of the present disclosure allows the first key groove (61) not to hinder the formation of the sealing ring (not illustrated).

Note that the foregoing description of the embodiments is a merely preferred example in nature, and is not intended to limit the scope, application, or uses of the present disclosure.

### INDUSTRIAL APPLICABILITY

As can be seen from the foregoing description, the present disclosure is useful for, in a scroll compressor provided with a compression mechanism having a fixed scroll and an orbiting scroll, a structure of allowing the compression mechanism to hold an Oldham ring that is a mechanism preventing the orbiting scroll from rotating on its axis.

### DESCRIPTION OF REFERENCE CHARACTERS

- 1: Scroll Compressor
- 21: Fixed Scroll
- 22: Orbiting Scroll
- 23: Housing
- 23a: Flange (Body)
- 40: Drive Shaft
- 50: Oldham Ring
- 51: First Key Mechanism
- 52: Second Key Mechanism
- 53: Ring Portion
- 54: First Key
- 61: First Key Groove
- 70: Orbiting Scroll Facing Surface
- 71: Facing Portion
- 71a: Tilted Surface
- 72: Annular Opening

## Claims

1. A scroll compressor comprising:
a housing (23) into which a drive shaft (40) is inserted;
an Oldham ring (50) configured to be slidable on the housing (23) by a first key mechanism (51) in a first direction perpendicular to an axial center of the drive shaft (40);
a fixed scroll (21) fixed to the housing (23); and
an orbiting scroll (22) meshing with the fixed scroll (21) and configured to be slidable on the Oldham ring (50) by a second key mechanism (52) in a second direction perpendicular to the axial center of the drive shaft (40),
the first key mechanism (51) including a first key (54) provided to the Oldham ring (50) and a first key groove (61) formed in the housing (23),
the first key (54) protruding from a ring portion (53) of the Oldham ring (50) toward the housing (23), and further protruding in a radially inward direction of the ring portion (53),
the housing (23) including a flange (23a) to which the fixed scroll (21) is fixed and which includes a facing portion (71) having a predetermined thickness and having an orbiting scroll facing surface (70) facing the orbiting scroll (22), and an annular opening (72) formed around the orbiting scroll facing surface (70) and movably housing the ring portion (53), **characterized in that**
the first key groove (61) is formed in a position adjacent to a back surface (71a) of the facing portion (71) opposite to the orbiting scroll facing surface (70) so as to extend radially inwardly from the annular opening (72).

2. The scroll compressor of claim 1, wherein
the first key (54) includes a pair of first keys (54) opposed to each other by 180° on the Oldham ring (50), and
an interval (A) between the pair of the first keys (54) is smaller than an outer diameter (B) of the facing portion (71) of the housing (23), and
a thickness (C) of the ring portion (53) is larger than a thickness (D) of the facing portion (71) of the housing (23).

3. The scroll compressor of claim 1 or 2, wherein
the back surface of the facing portion (71) is a tilted surface (71a) such that a thickness of the facing portion (71) increases toward an inner periphery of the facing portion (71).

4. The scroll compressor of any one of claims 1 to 3, wherein
the first key groove (61) is a groove opened on a back surface of the flange (23a) of the housing (23).

5. The scroll compressor of any one of claims 1 to 3, wherein
the first key groove (61) is a groove opened on an outer peripheral surface of the flange (23a) of the housing (23).

6. The scroll compressor of any one of claims 1 to 3, wherein
the facing portion (71) is configured as a separate member different from the housing (23) and fixed to a main body of the housing (23).

## Patentansprüche

1. Spiralverdichter, umfassend:
ein Gehäuse (23), in dem eine Antriebswelle (40) eingesetzt ist;
einen Oldham-Ring (50), der konfiguriert ist, um auf dem Gehäuse (23) durch einen ersten Keilmechanismus (51) in einer zu einer axialen Mitte der Antriebswelle (40) senkrechten ersten Richtung zu gleiten;
eine feststehende Spirale (21), die an dem Gehäuse (23) fixiert ist; und
eine kreisende Spirale(22), die mit der feststehenden Spirale (21) in Eingriff steht und konfiguriert ist, um auf dem Oldham-Ring (50) durch einen zweiten Keilmechanismus (52) in einer zur axialen Mitte der Antriebswelle (40) senkrechten zweiten Richtung zu gleiten,
wobei der erste Keilmechanismus (51) einen ersten Keil (54), der an dem Oldham-Ring (50) vorgesehen ist, und eine erste Keilnut (61) enthält, die in dem Gehäuse (23) ausgebildet ist,
der erste Keil (54) von einem Ringabschnitt (53) des Oldham-Rings (50) in Richtung zum Gehäuse (23) vorragt, und ferner in einer radial nach innen verlaufenden Richtung des Ringabschnitts (53) vorragt,
das Gehäuse (23) einen Flansch (23a) enthält, an dem die feststehende Spirale (21) fixiert ist und der einen zugewandten Abschnitt (71) mit einer vorab festgelegten Dicke und einer zur kreisenden Spirale gewandten Fläche (70), die zur kreisenden Spirale (22) gewandt ist, und eine ringförmige Öffnung (72) enthält, die um die zur kreisenden Spirale gewandte Fläche (70) ausgebildet ist und den Ringabschnitt (53) beweglich aufnimmt, **dadurch gekennzeichnet, dass**
die erste Keilnut (61) in einer Position benachbart zu einer Rückfläche(71a) des zugewandten Abschnitts (71) gegenüber der der kreisenden Spirale zugewandten Fläche (70) ausgebildet ist, um sich von der ringförmigen Öffnung (72) radial nach innen zu erstrecken.

2. Spiralverdichter nach Anspruch 1,
wobei der erste Keil (54) ein Paar erste Keile (54), die einander um 180° gegenüberliegen, auf dem Oldham-Ring (50) enthält, und
ein Abstand (A) zwischen dem Paar erste Keile (54) kleiner als ein äußerer Durchmesser (B) des zugewandten Abschnitts (71) des Gehäuses (23) ist, und
eine Dicke (C) des Ringabschnitts (53) größer als eine Dicke (D) des zugewandten Abschnitts (71) des Gehäuses (23) ist.

3. Spiralverdichter nach Anspruch 1 oder 2, wobei die Rückfläche des zugewandten Abschnitts (71) eine geneigte Fläche (71a) ist, so dass eine Dicke des zugewandten Abschnitts (71) in Richtung zu einem inneren Umfang des zugewandten Abschnitts (71) zunimmt.

4. Spiralverdichter nach einem der Ansprüche 1 bis 3, wobei die erste Keilnut (61) eine Nut ist, die auf einer Rückfläche des Flansches (23a) des Gehäuses (23) offen ist.

5. Spiralverdichter nach einem der Ansprüche 1 bis 3, wobei die erste Keilnut (61) eine Nut ist, die auf einer äußeren Umfangsfläche des Flansches (23a) des Gehäuses (23) offen ist.

6. Spiralverdichter nach einem der Ansprüche 1 bis 3, wobei der zugewandte Abschnitt (71) als ein separates Element konfiguriert ist, das sich von dem Gehäuse (23) unterscheidet und an einem Hauptkörper des Gehäuses (23) fixiert ist.

## Revendications

1. Compresseur à spirale comprenant :
un carter (23) dans lequel est inséré un arbre de transmission (40) ;
une bague Oldham (50) configurée pour pouvoir coulisser sur le carter (23) à l'aide d'un premier mécanisme à clavette (51) dans une première direction perpendiculaire à un centre axial de l'arbre de transmission (40) ;
une spirale fixe (21) fixée sur le carter (23) ; et
une spirale orbitale (22) s'engrenant avec la spirale fixe (21), et configurée pour pouvoir coulisser sur la bague Oldham (50) à l'aide d'un deuxième mécanisme à clavette (52) dans une deuxième direction perpendiculaire au centre axial de l'arbre de transmission (40),
le premier mécanisme à clavette (51) comprenant une première clavette (54) placée sur la bague Oldham (50) et une première rainure de clavette (61) agencée dans le carter (23),
la première clavette (54) faisant saillie d'une partie annulaire (53) de la bague Oldham (50) vers le carter (23), et faisant également saillie dans une direction radialement vers l'intérieur de la partie annulaire (53),
le carter (23) comprenant une bride (23a) sur laquelle est fixée une spirale fixe (21), et comprenant une partie frontale (71) d'une épaisseur prédéterminée, et possédant une surface face à la spirale orbitale (70), faisant face à la spirale orbitale (22), et une ouverture annulaire (72) façonnée autour de la surface face à la spirale orbitale (70), et contenant de façon amovible la partie annulaire (53),
**caractérisé en ce que**
la première rainure de clavette (61) est façonnée dans une position adjacente à une surface postérieure (71a) de la partie frontale (71) en regard de la surface face à la spirale orbitale (70), de façon à s'étendre radialement vers l'intérieur depuis l'ouverture annulaire (72).

2. Compresseur à spirale selon la revendication 1, dans lequel
la première clavette (54) comprend une paire de premières clavettes (54) opposées l'une à l'autre, sur la bague Oldham (50), par un angle de 180°, et
un intervalle (A) entre la paire des premières clavettes (54) étant inférieur à un diamètre extérieur (B) de la partie frontale (71) du carter (23), et
une épaisseur (C) de la partie annulaire (53) étant supérieure à une épaisseur (D) de la partie frontale (71) du carter (23).

3. Compresseur à spirale selon la revendication 1 ou 2, dans lequel
la surface postérieure de la partie frontale (71) étant une surface inclinée (71a) de sorte qu'une épaisseur de la partie frontale (71) augmente vers un pourtour interne de la partie frontale (71).

4. Compresseur à spirale selon une quelconque des revendications 1 à 3, dans lequel
la première rainure de clavette (61) est une rainure ouverte sur une surface postérieure de la bride (23a) du carter (23).

5. Compresseur à spirale selon une quelconque des revendications 1 à 3, dans lequel
la première rainure de clavette (61) est une rainure ouverte sur une surface périphérique externe de la bride (23a) du carter (23).

6. Compresseur à spirale selon une quelconque des revendications 1 à 3, dans lequel
la partie frontale (71) est configurée comme un membre distinct différent du carter (23), et fixé sur un corps principal du carter (23).
